# EUROPÄISCHE PATENTSCHRIFT

(11) **EP 2 212 788 B1**
(45) Veröffentlichungstag und Bekanntmachung des Hinweises auf die Patenterteilung: **02.05.2018**
(21) Anmeldenummer: 08849800.1
(22) Anmeldetag: 06.11.2008
(51) Int. Cl.: G06F 11/07

(54) **VERFAHREN ZUM BETRIEB EINES ELEKTRONISCHEN GERÄTES**
METHOD FOR OPERATING AN ELECTRONIC DEVICE
PROCÉDÉ D'UTILISATION D'UN APPAREIL ÉLECTRONIQUE

(30) Priorität: 15.11.2007 DE 102007054608
(43) Veröffentlichungstag der Anmeldung: 04.08.2010
(73) Patentinhaber: Continental Automotive GmbH, 30165 Hannover (DE)
(72) Erfinder: BAY, Wolfgang, 65936 Frankfurt (DE); HENNINGER, Michael, 65779 Kelkheim (DE)
(86) Internationale Anmeldenummer: PCT/EP2008/065085
(87) Internationale Veröffentlichungsnummer: WO 2009/062884

(56) Entgegenhaltungen:
- US-A1- 2004 143 695
- US-A1- 2005 251 704
- US-B1- 6 442 702

## Beschreibung

Die Erfindung betrifft ein Verfahren zum Betrieb eines elektronischen, mit einem endlichen Energiespeicher mit elektrischem Strom versorgten Gerätes, bei dem auf einen Befehl zum Abschalten ein erstes Programm nachläuft.

Solche Geräte werden beispielsweise in heutigen Kraftfahrzeugen häufig eingesetzt und sind aus der Praxis bekannt. Bei solchen, beispielsweise als Steuergeräte ausgebildeten Geräten startet beispielsweise eine Software nach Erkennung des Abschaltens der Zündung des Kraftfahrzeuges das erstes Programm, durch das Daten in einem nicht flüchtigen Speicher abgelegt werden. Anschließend schaltet die Software die eigene Stromversorgung aus. Hierdurch wird eine als endlicher Energiespeicher ausgebildete Batterie des Kraftfahrzeuges vor einer Entladung durch eine dauerhafte Versorgung des Steuergerätes geschützt.

Nachteilig bei den bekannten Geräten ist jedoch, dass bei einem Fehler im ersten Programm, beispielsweise wenn ein Prozessor einen Befehl zum Abschalten des Programms gegeben hat, die Elektronik im Gerät durch einen Fehler nicht abschaltet. Dies führt jedoch dazu, dass nach einer längeren Zeitspanne der endliche Energiespeicher entleert wird. Der Fehler im Gerät oder im Programmablauf bleibt jedoch für den Fahrer des Kraftfahrzeuges im Verborgenen.

Aus der US 6, 442,702 B1 ist ein Verfahren zum Betrieb eines elektronischen, mit einem endlichen Energiespeicher mit elektrischem Strom versorgten Gerätes bekannt. Bei dem vorbekannten Verfahren läuft auf einen Befehl zum Abschalten ein erstes Programm nach. Mit dem Befehl zum Abschalten wird ein einen Timer aufweisendes zweites Programm gestartet und das zweite Programm überwacht die vorgesehene Beendigung des ersten Programms. Das zweite Programm übernimmt nach Überschreiten der vorgesehenen Zeitspanne das Handeln und sendet einen Abschaltbefehl an eine Energiebereitstellungseinheit. Damit kann der Fehler der zum Nichtabschalten des Gerätes geführt hat, nicht gefunden werden.

Der Erfindung liegt das Problem zugrunde, ein Verfahren der eingangs genannten Art so weiterzubilden, dass es eine Ermittlung eines Fehlers im ersten Programm und bei mehreren Geräten die Identifikation des fehlerhaften Gerätes ermöglicht.

Dieses Problem wird erfindungsgemäß dadurch gelöst, dass mit dem Befehl zum Abschalten ein einen Timer aufweisendes zweites Programm gestartet wird, dass das zweite Programm die vorgesehene Beendigung des ersten Programms überwacht und bei Überschreiten einer vorgesehenen Zeitspanne bei der Beendigung des ersten Programms eine Fehlermeldung erzeugt.

Durch diese Gestaltung wird durch das zweite Programm erkannt, ob das erste Programm wie vorgesehen abgeschaltet wird. Liegt ein Fehler vor, welcher das Abschalten des ersten Programms verzögert, wird dieser durch die Überschreitung der vorgesehenen Zeitspanne erfasst und die Fehlermeldung ausgegeben. Daher kann einfach festgestellt werden, wann und wo ein Fehler aufgetreten ist und das betreffende Gerät daher nicht wie vorgesehen arbeitet. Liegt kein Fehler vor, lassen sich das zweite Programm und der Timer mit dem ersten Programm einfach abschalten. Durch diese Gestaltung wird nach dem Befehl zum Abschalten des Gerätes der Timer starten, der nach Ablauf einer festgelegten Zeit eine Markierung vornimmt. Die Erzeugung der Markierung nach der festgelegten Zeit bildet damit das zweite Programm. Das Vorhandensein der Markierung ist bereits ein Hinweis auf einen Fehler beim ersten Programm. Anders ausgedrückt wird bei fehlerfreier Beendigung des ersten Programms keine Markierung gesetzt. Die Erzeugung der Markierung kann beispielsweise ein Eintrag in einem so genannten EEPROM sein. Dieser kann sicherheitshalber mehrfach abgelegt werden. Durch geeignete Maßnahmen, wie beispielsweise einen elektrischen Pufferspeicher, ist der Fall einer einbrechenden Versorgung während des Schreibvorganges abzufangen. Der Eintrag kann auch einen Zeitstempel enthalten, der darauf hinweist, wie lange das Gerät bereits fehlerhaft war. Hierfür ist es zweckmäßig, mehrere Markierungen in festlegbaren Zeitabständen zu setzen.

Eine Beeinflussung der Betriebsdauer des Gerätes durch einen Fehler im zweiten Programm lässt sich gemäß einer anderen vorteilhaften Weiterbildung der Erfindung einfach vermeiden, wenn mit der Beendigung des ersten Programms das zweite Programm abgeschaltet wird.

Ein Fehler im Gerät oder in mit dem Gerät verbundenen Einrichtungen wird vorzugsweise einfach eingegrenzt, wenn die Überschreitung der vorgesehenen Dauer des ersten Programms und/oder die Erfassung eines Fehlers des ersten Programms abgespeichert werden.

Die Zeitdauer der Überschreitung der Beendigung des ersten Programms lässt sich gemäß der Erfindung einfach abschätzen, indem das zweite Programm nach Überschreitung der vorgesehenen Dauer des ersten Programms in festgelegten Zeitabständen einen Eintrag im Speicher vornimmt. Die festgelegten Zeitabstände können vorteilhafterweise konstant oder unterschiedlich lang sein.

Bei einem Kraftfahrzeug lässt sich die Gefahr einer Entleerung des endlichen Energiespeichers gemäß einer anderen vorteilhaften Weiterbildung der Erfindung besonders gering halten, wenn das Gerät als Steuergerät eines Kraftfahrzeuges ausgebildet ist und wenn der Fehler beim Start des Kraftfahrzeuges dargestellt wird. Die dargestellte Fehlermeldung kann dem Fahrer des Kraftfahrzeuges oder einer Werkstatt mitgeteilt werden.

Vorzugsweise wird die Information über den abgespeicherten Fehler über eine elektrische, elektromagnetische oder optische Kommunikations-Schnittstelle abgegeben. Bei einem Kraftfahrzeug kann diese Weitergabe zudem über einen so genannten CAN_Bus an ein Werkstatt-Diagnosegerät weiter gegeben werden.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
Fig. 1 schematisch ein erfindungsgemäßes Verfahren,
Fig. 2 ein Gerät zur Durchführung des erfindungsgemäßen Verfahrens aus Figur 1.

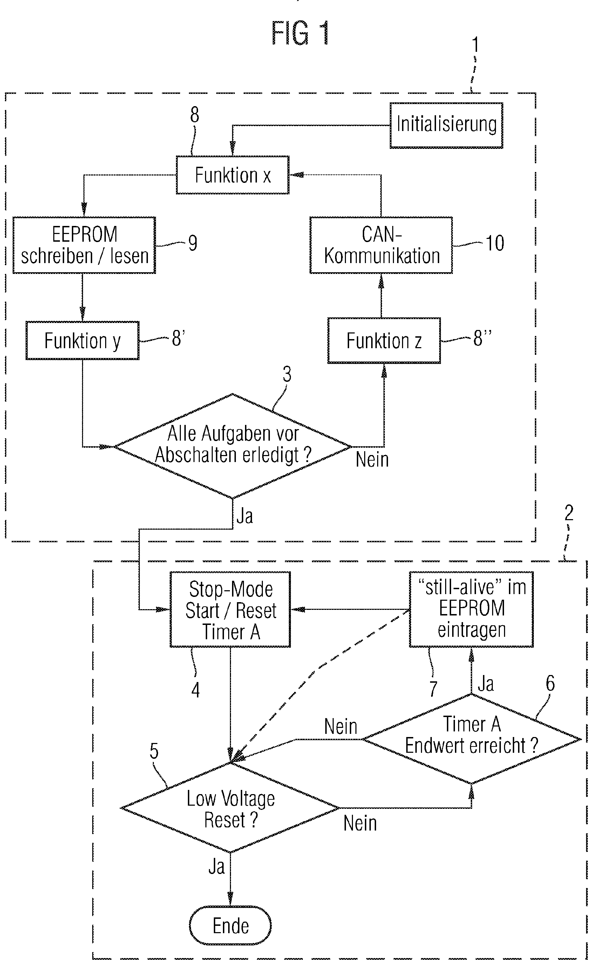

Figur 1 zeigt ein erfindungsgemäßes Verfahren, mit einem ersten Programm 1 und einem zweiten Programm 2. Wenn das erste Programm 1 abgeschaltet werden soll, wird in einem Programmschritt 3 abgefragt, ob vor dem Abschalten alle Aufgaben erledigt sind. Wenn dies der Fall ist, wird ein Timer 4 im zweiten Programm 2 gestartet. Der Timer 4 erfasst die Zeit bis zu einer vorgesehenen, bei einer Programmierung gewählten Zeitspanne. Wenn das erste Programm 1 innerhalb der vorgesehenen Zeitspanne abgeschaltet wird, erfolgt ein Low Voltage Reset 5 zur Abschaltung des zweiten Programms 2. Die Programme 1, 2 sind damit beendet. Wenn jedoch das erste Programm 1 nicht in der vorgesehenen Zeitspanne abgeschaltet wird und das Erreichen des Endwertes der Zeitspanne in einem weiteren Programmschritt 6 erfasst wird, erfolgt ein Eintrag 7 in einem nicht flüchtigen Speicher, beispielsweise einem als EEPROM ausgebildeten Speicher, dass ein Fehler vorliegt, also, das erste Programm 1 nicht wie vorgesehen abgeschaltet ist. Diese Eintrag 7 im Speicher, gegebenenfalls in Kombination mit einem Zeitstempel, ermöglicht die Eingrenzung des Fehlers. Diese Markierung kann bei einem Neustart des ersten Programms 1 optisch und/oder akustisch dargestellt werden.

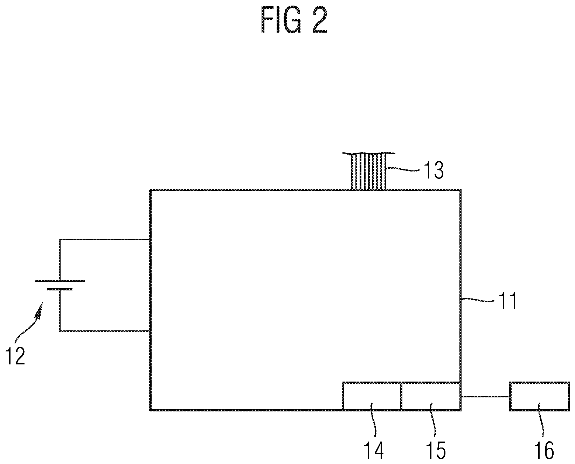

Weiterhin zeigt Figur 1, dass das erste Programm 1 beispielhaft mehrere Funktionen 8, 8', 8" aufweist und die Möglichkeit hat, Lese- und Schreibvorgänge 9 auf einem als EEPROM ausgebildeten Speicher auszuführen. Weiterhin vermag das erste Programm 1 eine Kommunikation 10 über eine so genannte CAN-Schnittstelle mit externen Geräten durchzuführen. Der Schritt des Abschaltens des ersten Programms 1 wird damit über das zweite Programm 2 überwacht. In dem ersten Programm 1 werden damit die Informationen des möglichen Nicht-Abschaltens, beispielsweise über einen in Figur 2 dargestellten CAN-Bus 13 weiter gegeben.

Figur 2 zeigt zur Verdeutlichung schematisch ein Gerät 11 zur Durchführung des Verfahrens aus Figur 1. Das Gerät 11 ist als Steuergerät in einem Kraftfahrzeug, beispielsweise zur Motorsteuerung ausgebildet und wird von einem endlichen Energiespeicher 12 mit elektrischer Energie versorgt. Das Gerät 11 steht über einen so genannten CAN_Bus 13 des Kraftfahrzeuges in Verbindung und hat als Speicher 14 das EEPROM, in dem die Markierung des zweiten Programms 2 mit dem Zeitstempel abgespeichert wird. Der CAN-Bus 13 ist ein Zwei-Draht-Bus. Über den CAN_Bus 13 kann der ermittelte Fehler im Gerät 11 mittels eines Werkstatt-Diagnosegerätes ausgelesen werden. In der dargestellten Ausführungsform hat das Gerät 11 eine Ausgabeeinrichtung 15 zur Darstellung der in dem EEPROM abgespeicherten Markierung auf einer Anzeigetafel 16 nach einem Neustart des Kraftfahrzeuges und damit bei einem Neustart des Programms.

## Patentansprüche

1. Verfahren zum Betrieb eines elektronischen, mit einem endlichen Energiespeicher mit elektrischem Strom versorgten Gerätes, bei dem auf einen Befehl zum Abschalten ein erstes Programm nachläuft, **dadurch gekenn- zeichnet,** dass mit dem Befehl zum Abschalten ein einen Timer aufweisendes zweites Programm gestartet wird, dass das zweite Programm die vorgesehene Beendigung des ersten Programms überwacht und bei Überschreiten einer vorgesehenen Zeitspanne bei der Beendigung des ersten Programms eine Fehlermeldung erzeugt und dass das zweite Programm nach Überschreitung der vorgesehenen Dauer des ersten Programms in festgelegten Zeitabständen einen Eintrag im Speicher vornimmt.

2. Verfahren nach Anspruch 1, **dadurch gekennzeichnet, dass** mit der Beendigung des ersten Programms das zweite Programm abgeschaltet wird.

3. Verfahren nach Anspruch 2, **dadurch gekennzeichnet, dass** die Überschreitung der vorgesehenen Dauer des ersten Programms und/oder die Erfassung eines Fehlers des ersten Programms abgespeichert werden.

4. Verfahren nach zumindest einem der vorhergehenden Ansprüche, **dadurch gekennzeichnet, dass** das Gerät als Steuergerät eines Kraftfahrzeuges ausgebildet ist und dass der Fehler beim Start des Kraftfahrzeuges dargestellt wird.

5. Verfahren nach zumindest einem der vorhergehenden Ansprüche, **dadurch gekennzeichnet, dass** die Information über den abgespeicherten Fehler über eine elektrische, elektromagnetische oder optische Kommunikations-Schnittstelle abgegeben wird.

## Claims

1. Method for the operation of an electronic appliance which is supplied with electric current by means of a finite energy store, in which a command to switch off is followed by the execution of a first program, **characterized in that** the command to switch off starts a second program which has a timer, and **in that** the second program monitors the intended termination of the first program and produces an error message if an intended period is exceeded when the first program is being terminated and **in that** the second program makes an entry in the memory at stipulated intervals of time when the intended duration of the first program has been exceeded.

2. Method according to Claim 1, **characterized in that** the termination of the first program switches off the second program.

3. Method according to Claim 2, **characterized in that** the exceeding of the intended duration of the first program and/or the sensing of an error in the first program are stored.

4. Method according to at least one of the preceding claims, **characterized in that** the appliance is in the form of a controller in a motor vehicle and **in that** the error is indicated when the motor vehicle is started.

5. Method according to at least one of the preceding claims, **characterized in that** the information about the stored error is output via an electrical, electromagnetic or visual communication interface.

## Revendications

1. Procédé de mise en fonctionnement d'un appareil électronique alimenté en courant électrique par un accumulateur d'énergie d'extrémité, dans lequel un premier programme est exécuté lors de la réception d'une instruction de désactivation, **caractérisé en ce qu'**un deuxième programme comportant une temporisation est démarré lors de la réception d'une instruction de désactivation, **en ce que** le deuxième programme surveille l'arrêt prévu du premier programme et lorsqu'un intervalle de temps prévu est dépassé lors de l'arrêt du premier programme, un message d'instruction est généré et **en ce que** le deuxième programme effectue à des intervalles de temps fixes une entrée dans une mémoire après dépassement de la durée prévue du premier programme.

2. Procédé selon la revendication 1, **caractérisé en ce que** le deuxième programme est désactivé lors de l'arrêt du premier programme.

3. Procédé selon la revendication 2, **caractérisé en ce que** le dépassement de la durée prévue du premier programme et/ou la détection d'une erreur du premier programme sont stockés.

4. Procédé selon au moins l'une des revendications précédentes, **caractérisé en ce que** l'appareil est réalisé sous la forme d'un appareil de commande d'un véhicule automobile, et **en ce que** l'erreur se produisant au démarrage du véhicule automobile est affichée.

5. Procédé selon au moins l'une des revendications précédentes, **caractérisé en ce que** l'information délivrée concernant l'erreur stockée concerne une interface de communication électrique, électromagnétique ou optique.
